# DEMANDE DE BREVET EUROPEEN

(11) **EP 3 738 897 A1**
(43) Date de publication de la demande: **18.11.2020**
(21) Numéro de dépôt: 19305637.1
(22) Date de dépôt: 17.05.2019
(51) Int. Cl.: B65B 59/00, B65G 25/02, B65B 43/46, B65B 43/56

(54) **SYSTÈME DE CONDITIONNEMENT DE RÉCIPIENT**

(71) Demandeur: SR Industrie, 28630 Fontenay-sur-Eure (FR)
(72) Inventeur: LE NAOUR, Jean-Laurent, 28500 VERT EN DROUAIS (FR)
(74) Mandataire: Lefevre-Groboillot, David André

(57) **Abrégé**

L'invention concerne un système de conditionnement notamment de récipients, comprenant une pluralité de postes de conditionnement disposés en série sur une longueur prédéterminée et traversés successivement par les récipients, et un agencement convoyeur de préhension et de transfert des récipients d'un poste à l'autre, selon un mouvement de pas à pas.

Le système est caractérisé en ce qu'il comprend au moins un agencement (1) de préhension et de transfert qui comprend un dispositif de deux éléments (7, 8) de pince de préhension et de transfert, qui s'étendent parallèlement l'un à l'autre sur la longueur occupée par les postes de conditionnement, et en ce que les deux éléments (7, 8) de préhension et de transport sont déplaçables en translation entre une position rapprochée de préhension et de transfert des récipients et une position écartée de dégagement des récipients, et, de façon solidaire l'un de l'autre, sur une distance d'un pas en avant dans la direction de transfert des récipients, en étant dans leur configuration rapprochée, et ensuite d'un pas en arrière en étant dans leur position écartée.

L'invention est utilisable pour le conditionnement de récipients.

## Description

L'invention concerne un système de conditionnement de récipient, comprenant une pluralité de postes de conditionnement disposés en série et traversés successivement par les récipients, et un agencement convoyeur de préhension et de transfert des récipients d'un poste à l'autre, selon un mouvement de pas à pas.

On connaît déjà des convoyeurs à chaines parallèles sans fin ou analogues munies d'orifices recevant des récipients qui peuvent ainsi être transportés en ligne d'un point à un autre. L'inconvénient de cette solution est l'incapacité à permettre le transport de récipients de différentes dimensions. De plus, ces convoyeurs nécessitent des re-réglages étant donné l'usure des chaînes. Ces chaînes ont un coût très important et doivent être changées régulièrement.

L'invention a pour but de pallier cet inconvénient.

Pour atteindre ce but, le système selon l'invention est caractérisé en ce que l'agencement de préhension et de transfert comprend au moins un dispositif de deux éléments de pince de préhension et de transfert, qui sont parallèles l'un à l'autre et sont susceptibles de s'étendre sur toute la longueur occupée des postes de conditionnement et en ce que les deux éléments de préhension et de transport sont déplaçables en translation entre une position rapprochée de préhension et de transfert des récipients et une position écartée de dégagement des récipients, et déplaçables de façon solidaire l'un de l'autre, sur une distance d'un pas en avant dans la direction de transfert des récipients, en étant dans leur configuration rapprochée et ensuite d'un pas en arrière en étant dans leur position écartée.

Selon une caractéristique avantageuse de l'invention, le système comprend un dispositif de support des récipients, qui est disposé en-dessous des éléments de pince et entre ceux-ci et sur lequel les récipients prennent appui.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
la figure 1 est une vue en perspective, mais schématique, d'un mode de réalisation du système de conditionnement de récipients selon l'invention ;
la figure 2 est une vue schématique du dessus de la figure 1, pour illustrer le fonctionnement de celui-ci ;
la figure 3 est une vue à plus grande échelle de la partie III sur la figure 2 ;
les figures 4A et 4B sont des vues correspondant à celle de la figure 2, mais montrent en plus des stations de conditionnement des récipients, et
la figure 5 est un schéma synoptique du fonctionnement du système selon l'invention.

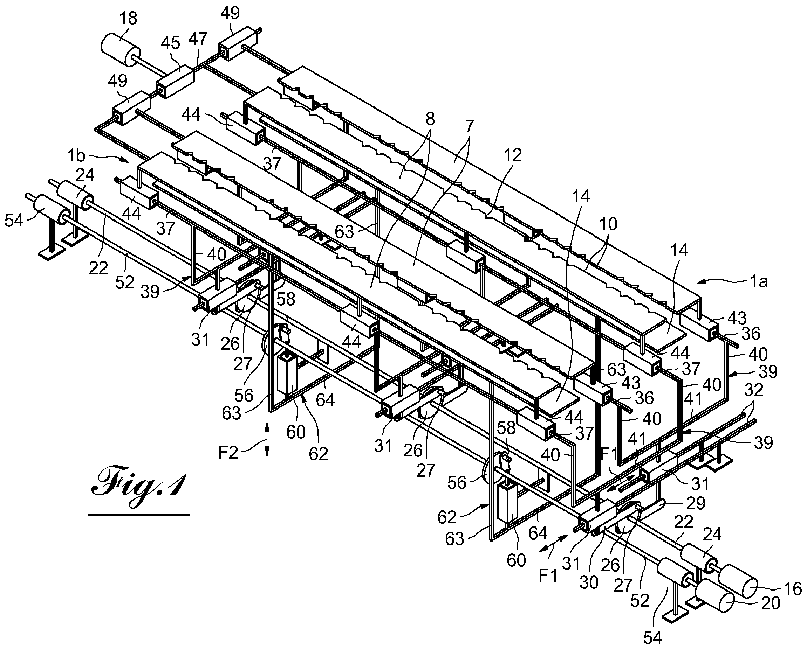

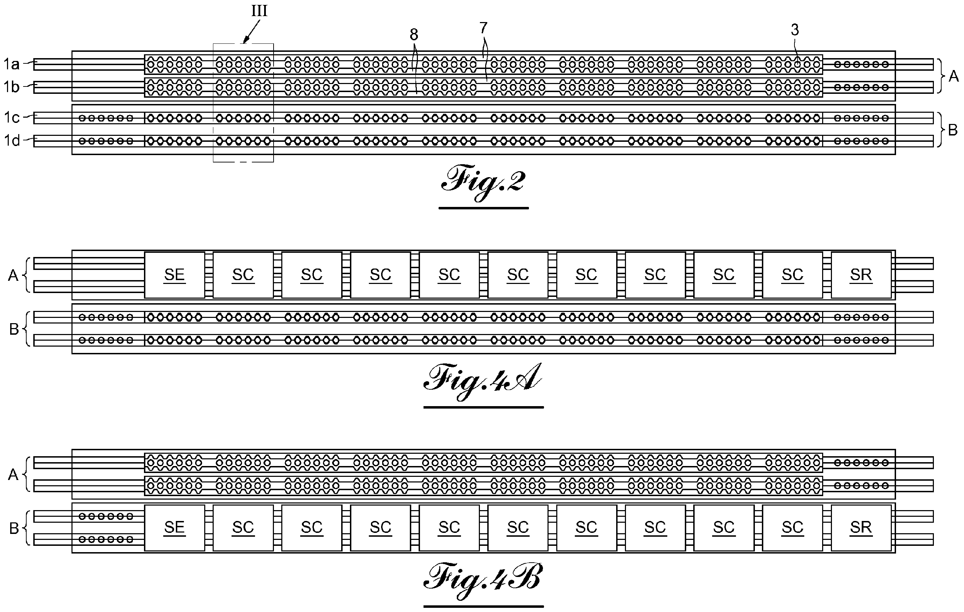

La figure 1 montre schématiquement, à titre d'exemple non limitatif, un système de conditionnement de récipients selon l'invention, qui, dans le cas d'espèce, comporte deux agencements 1a et 1b de préhension et de transfert de récipients,3 appelés ainsi convoyeurs. Bien entendu, le système pourrait aussi ne comprendre qu'un seul agencement ou comprendre plus de deux agencements, conformément à la figure 2. Sur la figure 1 les deux agencements sont configurés pour fonctionner de façon synchrone et forment donc une paire A, tandis que sur la figure 2 les deux agencements 1c et 1d supplémentaires, également à fonctionnement synchrone, sont destinés à constituer une paire B destinée à fonctionner de façon asynchrone par rapport à la première paire d'agencements A.

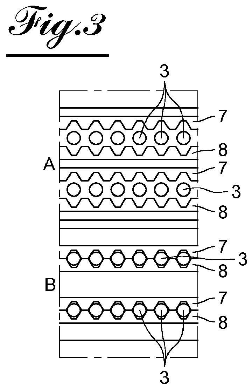

Comme le montre les figures, chaque agencement 1 est configuré pour saisir les récipients 3 à conditionner et pour les transférer successivement aux différentes stations de conditionnement SC1 à SCn indiquées sur la figure 4. Les stations, à titre d'exemple, pourraient être des stations de désinfection, de remplissage, de fermeture, de contrôle, ect... des récipients. Ces stations de conditionnement sont montées en série et occupent donc une longueur prédéterminée du système. Pour pouvoir accomplir ses fonctions, chaque agencement 1 comporte deux éléments de préhension et de transfert portant les références 7 et 8, qui, dans l'exemple représenté, sont formés chacun par une plaque allongée rectangulaire. Ces plaques s'étendent parallèlement et en face l'une de l'autre par leurs bords adjacents rectilignes 10. Dans ces faces rectilignes 10 sont ménagées des encoches 12 de réception des récipients 3 à saisir et transférer d'une station de conditionnement à l'autre. Ces encoches présentent chacune une forme d'un V s'ouvrant en direction de l'axe longitudinal de l'agencement. Les plaques accomplissent donc la fonction de pince et sont alors appelées plaques de pince. Ces encoches 12 sont organisées en groupe et il y a autant de groupes qu'il y a de stations de conditionnement. Le nombre d'encoches 12 de chaque groupe est identique au nombre de récipients pouvant être conditionnés simultanément dans chaque station. Dans l'exemple donné sur les figures 2 et 3, chaque groupe comporte six récipients 3. Bien entendu le nombre d'encoches peut être supérieur au nombre de récipients à saisir.

Les deux plaques 7, 8 de chaque agencement 1 présentent chacune une longueur qui correspond à la longueur d'extension de l'ensemble des stations de conditionnement.

Comme il sera décrit plus loin de façon détaillée, les deux plaques 7, 8 sont déplaçables en translation entre une position rapprochée de transfert ou transport des récipients engagés chacun dans une encoche et une position écartée l'une de l'autre, dégagée des récipients, de façon à pouvoir se déplacer axialement. Les deux plaques sont déplaçables axialement, en étant solidarisées l'une de l'autre, selon un pas en avant, c'est-à-dire dans la direction de la progression des récipients à conditionner et ensuite d'un pas dans la direction arrière. Chaque pas correspond à la distance entre deux stations de conditionnement.

Comme on le voit sur la figure 1, chaque agencement de préhension et de transfert de récipients comprend en outre une plaque 14 de support des récipients, qui est disposée en dessous des plaques de pince et entre celles-ci, de façon que les récipients puissent prendre appui sur cette plaque de fond qui est verticalement réglable en position pour permettre une adaptation du système à différents types et tailles de récipients, en coopération avec les encoches 12 en forme d'un V ouvert en direction de l'axe longitudinal de l'agencement. A cette fin, l'écart des plaques de pince est variable en fonction de la forme des récipients. Bien entendu, les encoches pourraient avoir toute autre forme que celle d'un V, par exemple carrées, pour être adaptées à la forme des récipients.

On décrira ci-après le dispositif de motorisation d'un agencement selon l'invention, en se référant à la figure 1 qui montre deux agencements 1a et 1b, qui sont montés en parallèle.

Ce dispositif de motorisation comprend un moteur 16 pour le déplacement en translation des plaques de pinces 7 et 8 des deux agencements, un moteur 18 pour le mouvement d'un pas en avant et d'un pas en en arrière des plaques et un moteur 20 destiné à assurer le réglage en hauteur des plaques 14 de support des récipients.

Le moteur 16 de déplacement en translation des plaques de pince 7 entraine en rotation un arbre 22 qui est supporté au niveau de chaque extrémité par un palier 24 et entraine en rotation, dans l'exemple représenté, trois disques 26 répartis sur la longueur de l'arbre et comportant chacun deux manetons excentriques 27 disposés diamétralement opposés sur le disque. Le mouvement circulaire de chaque maneton 27 est transformé par l'intermédiaire de deux bielles articulées 29, 30 en un mouvement rectiligne d'une glissière 31 coulissant sur un axe fixe 32 selon la double flèche F1. Ce mouvement est perpendiculaire à l'arbre 22. Le mouvement rectiligne d'une glissière 31 est transmis aux plaques de pince 7 des deux agencements 1a et 1b de préhension et de transfert, tandis que le mouvement rectiligne de l'autre glissière 31 est transmis aux plaques 8 des agencements. Etant donné la position diamétralement opposée des manetons 27 sur les disques rotatifs 26, les deux plaques 7, d'une part, et les deux plaques 8, d'autre part, peuvent accomplir leur mouvement de rapprochement et d'écartement pour la préhension et la libération des récipients à conditionner.

Pour la transmission du mouvement rectiligne selon la double flèche F1 de chaque glissière 31 aux deux plaques de pinces correspondantes 7 ou 8, on a associé à chaque plaque 7 et à chaque plaque 8 une tige respectivement 36, 37 qui s'étend sur toute la longueur et au-delà de la plaque et est reliée par une pièce intermédiaire 39 en forme d'un U à la glissière 31 correspondante. Plus précisément, les extrémités libres des branches 40 de la pièce 39 sont fixées chacune à une tige 36, 37 tandis que la base 41 est montée fixe sur la glissière 31. Chaque plaque 7 est montée sur sa tige 36, par l'intermédiaire de glissières 43 et chaque plaque 8 sur la tige 37 par l'intermédiaire de glissières 44, dont le nombre est fonction de la longueur de la tige.

Ainsi, les plaques 7 et 8 sont déplaçables en translation par le moteur 16 et sont aussi susceptibles de se déplacer axialement sur les tiges 36, 37 au moyen des glissières 43, 44, grâce au moteur 18.

Pour que les plaques puissent être déplacées de façon commandée sur la distance d'un pas en avant et d'un pas en arrière sur les tiges 36 et 37, le moteur 18 est du type de moteur à axe de sortie mobile selon un mouvement de va-et-vient sur la distance égale au pas de déplacement des plaques. A cette fin, le moteur 18 agit sur une glissière 45 dans laquelle coulisse parallèlement à la direction de translation des plaques une tige 47 qui est solidarisée, sur la figure 1, des deux plaques de pinces 8 tandis que les deux plaques 7 sont pourvues chacune d'une glissière 49 qui coulisse sur la tige 47.

Pour réaliser le réglage en hauteur des deux plaques de support 14, le moteur 20 entraine en rotation un arbre 52 qui est supporté à chaque extrémité par un palier 54. Sur cet arbre sont montés solidaire en rotation une pluralité de disques excentriques 56, dont le nombre dépend de la longueur de l'arbre 52 et ainsi de la longueur occupée par les postes de conditionnement. Le système selon la figure 1 comporte deux disques 56 comportant chacun un excentrique en forme d'un maneton 58 dont le mouvement circulaire est transformé par un convertisseur 60 en un mouvement vertical selon la double flèche F2. Ce mouvement rectiligne vertical est transmis aux deux plaques de support 14 par l'intermédiaire d'un étrier vertical 62 dont les branches 63 sont fixées par leurs extrémités sous les plaques 14 tandis que la sortie du convertisseur 60 est fixée à la base 64.

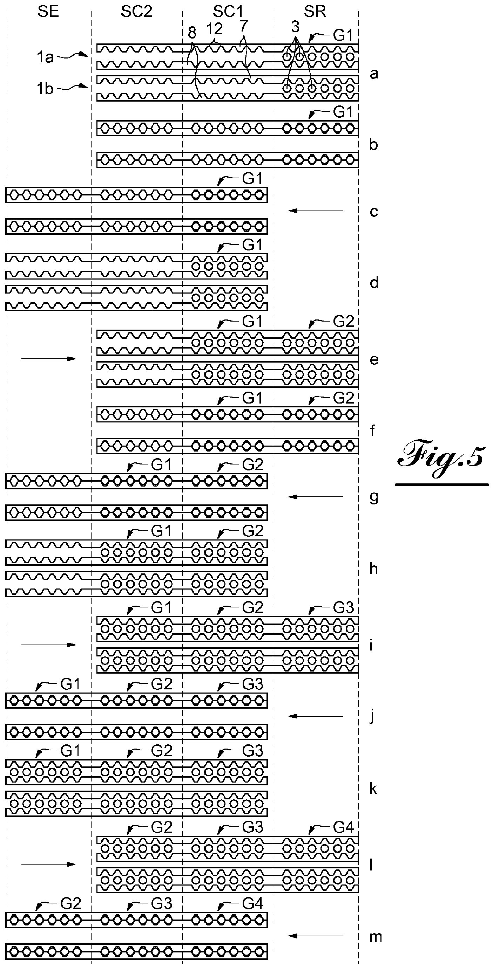

Le fonctionnement du système selon la figure 1 est illustré à la figure 5 qui montre plusieurs phases du fonctionnement. A titre d'exemple, pour être simple, le système de figure 5 comprend une station SR de réception de groupes G1 à G4 de récipients 3, deux stations de conditionnement SC1 et SC2 et une station d'évacuation de récipients SE.

La figure 5 illustre le système à la phase a où six récipients 3 d'un groupe G1 sont placés dans la station de réception SR sur les plaques de support 14 des deux agencements la, 1b de préhension et de transfert dont les plaques de pince 7 et 8 se trouvent dans leur position écartée. A la phase b suivante, les plaques de pince se referment sur les récipients alors engagés dans les encoches 12. A la phase c suivante les agencements se déplacent d'un pas en avant pour que le groupe de récipients G1 soit positionné dans la première station de conditionnement SC1. Puis les plaques de pince s'ouvrent, c'est-à-dire s'écartent à la phase d et reviennent dans leur position initiale, en effectuant un pas de mouvement en arrière. C'est la phase dans laquelle s'effectue simultanément le conditionnement des récipients du groupe G1 dans la station SC1 et la réception d'un nouveau groupe G2 des récipients. Ces récipients sont saisis par les plaques de pince à la phase f, comme ceux du groupe G1. Puis les agencements s'avancent d'un pas à la phase g jusqu'à la station de conditionnement suivant SC2. A la phase h les plaques de pince s'écartent et reviennent d'un pas en arrière à la phase i, pour permettre simultanément le conditionnement des récipients des groupes G1 et G2 aux stations respectivement SC1 et SC2 et la réception d'un nouveau groupe G3 de récipients 3 dans la station SR, qui seront alors saisis entre les plaques de pince et transférés d'un pas en avant, comme les autres groupes de récipients G1 et G2 déjà engagés, dans la phase j. Le groupe de récipients G1 se retrouve alors dans la station d'évacuation SE. Puis les agencements convoyeurs s'ouvrent en écartant les plaques de pince. C'est la phase k. Ils font ensuite un pas en arrière selon la phase 1. Au cours de cette phase, les récipients du groupe G1 sont évacués et les groupes de récipients G2 et G3 sont traités dans les stations de conditionnement respectivement SC2 et SC1 et un nouveau groupe de récipients G4 est reçu. Puis à la phase m, les plaques de pince se referment et transportent les récipients des groupes G2, G3 et G4 d'un pas en avant, de façon que ces groupes se trouvent alors dans les stations respectivement d'évacuation SE et de conditionnement SC2 et SC1 comme auparavant le groupe G1, G2 et G3 à phase j. Ensuite se déroulent les phases k et 1, mais cette fois-ci avec les groupes G2, G3 et G4, avec évacuation des récipients du groupe G2, conditionnement des groupes G3 et G4 et, avec réception d'un nouveau groupe de récipients, et de suite.

Ainsi, les récipients sont transférés selon ce mouvement de pas à pas successivement d'une station de conditionnement à l'autre par des agencements de préhension et de transfert 1 se déplaçant selon la cadence qui vient d'être décrite toujours en effectuant un pas en avant, avec les plaques de pinces fermées, puis un pas en arrière avec les plaques de pinces ouvertes.

La figure 2 montre un système selon l'invention qui comporte deux paires d'agencements A et B de préhension et de transfert 1a, 1b selon l'invention telle que représentée à la figure 1. Ces deux agencements de convoyeurs sont commandés de façon qu'une paire d'agencements, par exemple la paire A, soit à l'état de transfert tandis que l'autre paire B soit à la phase de conditionnement, c'est-à-dire de travail, avec les plaques de pinces écartées, ce qui permet d'augmenter la cadence de fonctionnement du système.

Il est encore à noter que chaque paire d'agencements A ou B peut être équipée d'un ensemble de stations de conditionnement SC, comme le montre la figure 4A, dont le nombre est fonction du type de conditionnement. Mais, conformément à la figure 4B, il est aussi envisageable de prévoir pour chaque paire de convoyeurs A, B un seul ensemble de stations qui sert alternativement l'une et l'autre paire d'agencements de convoyeurs.

Il ressort de la description qui précède que le système de l'invention présente de multiples avantages. En effet, il permet une grande flexibilité en ce qui concerne les formes et les dimensions des récipients sans changement de pièces, par simple réglage de l'écart des plaques de pince 7 et 8 et de la position en hauteur des plaques de support 14. Le système selon l'invention permet de transférer des récipients de tout type, à savoir des pots préformés, des bouteilles, des poches ou analogue. Il est à noter que le terme récipient couvre tout type d'emballage approprié. Le transfert d'une station de conditionnement à l'autre se faisant directement, il n'y a pas de position d'attente et de ce fait, les récipients restent ouverts moins longtemps, ce qui améliore les conditions d'hygiène dans le cas du conditionnement de produits alimentaires. Grâce à sa configuration simple et modulaire, le système peut comprendre un nombre indéfini d'agencements de convoyeurs 1a à 1n formant un groupe et fonctionnant de façon synchrone et deux groupes fonctionnant de façon asynchrone.

Bien entendu de multiples modifications peuvent être apportées au système tel que décrit et représenté. Ainsi, les plaques de pince peuvent avoir une autre forme que celle de plaques rectilignes. Les bords pourvus d'encoches pourraient être curvilignes. Surtout le dispositif de motorisation pourrait être de tout autre concept connu, à condition de conserver les mouvements d'écartement des éléments de pince et en avant et en arrière.

## Revendications

1. Système de conditionnement notamment de récipients, comprenant une pluralité de postes de conditionnement disposés en série sur une longueur prédéterminée et traversés successivement par les récipients, et un agencement convoyeur de préhension et de transfert des récipients d'un poste à l'autre, selon un mouvement de pas à pas, **caractérisé en ce qu'**il comprend au moins un agencement (1) de préhension et de transfert qui comprend un dispositif de deux éléments (7, 8) de pince de préhension et de transfert, qui s'étendent parallèlement l'un à l'autre sur la longueur occupée par les postes de conditionnement, et **en ce que** les deux éléments (7, 8) de préhension et de transport sont déplaçables en translation entre une position rapprochée de préhension et de transfert des récipients (3) et une position écartée de dégagement des récipients, et, de façon solidaire l'un de l'autre, sur une distance d'un pas en avant dans la direction de transfert des récipients, en étant dans leur configuration rapprochée, et ensuite d'un pas en arrière en étant dans leur position écartée.

2. Système selon la revendication 1, **caractérisé en ce qu'**il comprend un dispositif de support (14) des récipients (3), qui est disposé en-dessous des éléments de pince (7, 8) et entre ceux-ci et sur lesquels les récipients (3) prennent appui.

3. Système selon une des revendications 1 ou 2, **caractérisé en ce que** les bords (10) situés en regard l'un de l'autre des deux éléments de pince (7, 8) comportent des encoches (12) en forme d'un V, que les encoches d'un bord étant disposées en face des encoches du bord en face de façon qu'un récipient peut être saisi et reçu dans deux encoches (12) situées en regard, lorsque les éléments de pince sont dans leur position rapprochée.

4. Système selon l'une des revendications 1 à 3, **caractérisé en ce que** chaque élément de pince (7, 8) est en forme d'une plaque.

5. Système selon l'une des revendications 1 à 4, **caractérisé en ce que** l'écart des éléments de pince (7,8) d'un agencement convoyeur de préhension et de transfert de récipients est variable et adaptable aux dimensions des récipients (3).

6. Système selon l'une des revendications 2 à 5, **caractérisé en ce que** le dispositif de support (14) des récipients (3) est réglable en hauteur, en fonction des dimensions des récipients (3).

7. Système selon l'une des revendications précédentes, **caractérisé en ce qu'**il comprend au moins un deuxième agencement convoyeur (1b) de préhension et de transfert de récipients (3) qui fonctionne de façon synchrone au premier agencement convoyeur (la), pour former un groupe d'agencements synchrones.

8. Système selon l'une des revendications 1 à 6, **caractérisé en ce qu'**il comprend au moins un autre agencement convoyeur (1c) de préhension et de transfert de récipients (3), qui fonctionne de façon asynchrone au premier agencement convoyeur (1a).

9. Système selon la revendication 7, **caractérisé en ce qu'**au moins un autre agencement convoyeur (1d) de préhension et de transfert de récipients (3) est associé à l'agencement convoyeur asynchrone (1c), qui est synchrone à celui-ci pour former un groupe d'agencements convoyeurs asynchrone au premier agencement convoyeur (1a).

10. Système selon l'une des revendications 8 ou 9, **caractérisé en ce qu'**il est adapté pour que, lorsqu'un agencement convoyeur est en phase de conditionnement ou de transfert, l'autre agencement asynchrone est en phase de transfert ou de conditionnement.

11. Système selon l'une des revendications 1 à 10, **caractérisé en ce que** le dispositif de commande du mouvement en translation des éléments de pince (7, 8) comprend un moteur (16), un disque à deux manetons (58) situés diamétralement opposé sur le disque, qui est entraîné en rotation par le moteur, et des moyens convertisseurs (29, 30, 31) du mouvement rotatif du disque en un mouvement rectiligne des éléments de pince, chaque maneton occasionnant le déplacement d'un élément de pince.

12. Système selon l'une des revendications 1 à 11, **caractérisé en ce que** le dispositif de commande du mouvement solidaire et pas à pas des éléments de pince (6, 7) comprend un dispositif moteur (18) adapté pour générer un mouvement d'un pas en avant et d'un pas en arrière et des moyens de transmission de ce mouvement aux éléments de pince.

13. Système selon l'une des revendications 1 à 12, **caractérisé en ce qu'**il comprend un dispositif moteur (20) et un dispositif convertisseur du mouvement rotatif de l'axe moteur en un mouvement rectiligne de réglage de la position en hauteur de l'élément de support (14) des récipients.

14. Système selon l'une des revendications 11 à 13, **caractérisé en ce que**, dans un groupe d'agencements convoyeur synchrone, les éléments de pince (6, 7) destinés à se déplacer simultanément dans le même sens sont reliés les uns aux autres et commandés par un des deux manetons (58).
